# EUROPEAN PATENT SPECIFICATION

(11) **EP 1 964 461 B1**
(45) Date of publication and mention of the grant of the patent: **30.09.2009**
(21) Application number: 08102207.1
(22) Date of filing: 01.03.2008
(51) Int. Cl.: A01D 41/127

(54) **Combine harvester power management control**
Steuerung des Leistungsmanagements einer kombinierten Erntemaschine
Contrôle de gestion de la puissance d'une moissonneuse combinée

(30) Priority: 01.03.2007 US 904235 P; 22.06.2007 GB 0712040
(43) Date of publication of application: 03.09.2008
(60) Divisional application: 09166490.4
(73) Proprietor: CNH Belgium N.V., 8210 Zedelgem (BE)
(72) Inventor: Farley, Herbert M., Elizabethtown, 17022 (US); Duquesne, Frank, 8550, Zwevegem (BE); Van Overschelde, Daniël M.G., 8820, Torhout (BE)
(74) Representative: CNH IP Department

(56) References cited:
- EP-A- 1 529 434
- US-A- 5 878 557

## Description

The present invention relates generally to a combine harvester having an engine for driving the harvester and for additionally powering a threshing mechanism for separating harvested crop into grain and crop residue and at least one further crop processing subsystem that may be selectively configured and disengaged, and more particularly, the invention relates to a system and method for managing maximum engine power responsive to a variety of different subsystem configurations or operating modes having different power needs, such that the available power more closely matches anticipated needs of the threshing mechanism and crop processing subsystems, thus reducing the possibility of overpowering the subsystems.

The current marketplace for work machines, and particularly agricultural machines such as combine harvesters, is substantially driven by advertised horsepower. To keep pace with competition, manufacturers have been substantially increasing available engine power. This peak torque power of the specified engine is required to operate the full complement of product applications and variations. For instance, a combine can be used with a variety of different header configurations, e.g., corn (maize), or small grain (wheat, legumes), which headers can be of vastly different widths, and thus have widely different power requirements. For satisfactory performance, the engine of such a combine harvester has to provide power to each and every crop processing subsystem and the top range combine harvesters have engines that can readily provide the needed power in all modes of operation.

In a combine harvester, the rotating threshing drum or rotor of the threshing mechanism is the greatest power consumer. Residue chopping also requires a substantial amount of power, especially when chopping straw of small grain crops, such as wheat and barley. Thus, when the chopper is configured in the chopping mode, an adequate, relatively large amount of engine power must be available, both for operating the chopper under normal loads, and also when heavier loads are present, such as when a slug of crop residue is processed. This power requirement may vary, however, within a wide range, as a function of the operating speed, and the position of counter or stationary knives of the chopper. In other instances, particularly when it is desired to windrow or swath the crop residue, the straw chopper is bypassed, e.g., by positioning of doors or plates, and may be idle, and even disengaged entirely from the engine. As a further possible configuration, even though the chopper is not configured for chopping, the chopper may still require some amount of available engine power, for instance, as a result of being unintentionally being left running or engaged even though mechanically bypassed, or because of being intentionally left running while bypassed so as to chop any crop residue that still makes it into the chopper, to avoid clogging the chopper. And, as a further possible configuration, the crop residue may be directed to bypass the chopper and instead enter a crop residue spreader, so as to substantially increase the power demand of that device. Each of these configurations will have its own required power level that will be less than the full amount of power that the engine is able to direct to the subsystems, such that if available maximum power is not properly managed for a given configuration, damage can result. And, conversely, if insufficient maximum power is available, performance can suffer.

To explain, when such a substantial power consuming subsystem as the straw chopper is bypassed or disengaged, more power becomes available for the other crop processing subsystems. The spare engine capacity can increase the power applied to other subsystems, such as the driveline of the threshing drum of the threshing or separating apparatus. The operator, who often wants to maximise on harvesting capacity, may tend to use the spare power to accelerate the combine harvester, in order the increase the machine throughput. By doing so, however, an operator risks exceeding a subsystem's capacity. For example, threshing efficiency typically decreases drastically if too much crop is taken in. Overload will eventually result in excessive wear/and or deformation of the components of the crop processing subsystem. Elements of the threshing system, such as threshing slats, may bend and threshing concaves may become distorted. The available amount of power may also exceed the mechanical limitations of the driveline to the threshing drum, thereby shortening the lifetime of components such as drive belts and gearboxes. Thus, it is apparent that it would be desirable to have a scheme or system for more closely or precisely controlling available engine power, under a wide range of possible crop handling or processing subsystem configurations.

Manufacturers have devised a variety of engine power management systems and schemes for combine harvesters. Reference generally, US-B-6,865,870, which provides a system that provides different overall power levels for different operating modes, e.g., field work verses road travel. There are also known systems that set power levels as a function of equipment connected to the harvester. Several such systems utilise detectors for determining the identity of a header attached to a combine harvester, and provide corresponding stored engine power curves for the particular headers. Reference in this regard, US-B-6,397,571. Manufacturers have also devised engine power management schemes for setting available engine power levels as a function of systems of the machine that are currently engaged or operating, e.g., straw chopper, propulsion system, harvester assembly, separator, as indicated by the positions of switches for engaging or activating the respective systems, e.g., the on/off switches for the systems. Reference in this regard, US-A-5,878,557. Still other engine management schemes rely on sensed measurements of actual power usage of the various systems, for determining available power level values. Reference in this regard, US-A-6,073,428.

However, an observed shortcoming of setting maximum available power as a function of overall operating mode as suggested above in the first patent, and based on header identity alone, such as proposed in US-B-6,397,571, is that too much available power may be present in instances when less than all crop processing subsystems are engaged. As noted above, these subsystems often are significant contributors to the total consumed power. In removing the power requirements of one or more of the major subsystems, i.e., turning off or disengaging some of the systems, the balance of subsystems still on or engaged can divide the total available power. In many cases, however, this can result in substantially overrunning the subsystems' functional capability, resulting in grain loss, etc., or exceeding mechanical limits causing failures. It is not cost effective to design every system to carry the maximum available power for a plethora of configurations, but rather it would be preferred to limit available power to the subsystem not exceeding its performance limits.

Setting maximum available power based on the identity of engaged or activated subsystems such as by monitoring on/off switches as proposed in US-A-5,878,557, also suffers from a shortcoming that practically, it will necessitate setting the available power level to accommodate the maximum expected power usage of those subsystems, and doesn't accommodate reduced power needs of different configurations of the subsystems. For example, as set forth above, an engaged straw chopper may use as little as just a few horsepower. For instance, a chopper may use as little as 20 horsepower, if configured one way, e.g., bypassed and idling, and as much as 150 horsepower if configured another way, e.g., for receiving straw and with stationary knives fully extended or deployed. Thus, this system falls short of providing a closely tailored level of available power for different subsystem configurations having different power needs.

Setting maximum available power as a function of measured actual usage, as proposed in US-A-6,073,428, suffers from the shortcoming that it must rely on measurement means that can be unreliable, inaccurate, and/or complex, and can require calibration to ensure accuracy, so as to be of limited practicality. Also, the actual power usage can vary significantly during operation as a result of temporary or intermittent operating conditions such as passage of slugs of crop material through the crop processing systems, such that the level of available power will be correspondingly varied, reactive to demand, as opposed to in anticipation of demand, which can be problematic. For example, if the actual power usage during an interval of time is relatively low as a result of smooth operating conditions, the available maximum engine power may be set to reflect this. But, when an abrupt increase in power demand occurs, such as entry of a slug of dense crop material into one or more of the crop processing subsystems, e.g., the threshing system, chopper, or spreader, the additional engine power available may be inadequate. This inadequate power can cause the engine to bog down or stall, such that other subsystem performance suffers. Then, if in response the system automatically or the operator manually increases power, after the need for the additional power has passed, the now available power will not closely match actual power needs.

Thus, what is sought is a control operable for setting a level of maximum engine power available for any given product derivation, configuration or mode, including wherein one or more subsystems of a combine may not be being used, or is configured in any of a variety of relatively low power requirement options verses a higher power requirement option, which control is not reliant on power usage measurement means which may suffer from the shortcomings and disadvantages set forth above.

What is disclosed is an automatic control system operable for setting a level of maximum engine power available for any given product derivation or configuration of a vehicle, with particular utility for a combine harvester, including wherein one or more subsystems of the combine may not be being used, or is configured so as to be used at a relatively low or intermediate power requirement option verses a higher power requirement option, which control is not reliant on possibly troublesome power usage measurement means, or will otherwise suffer from the shortcomings and disadvantages set forth above.

According to a preferred aspect of the invention, the control utilises a methodology for limiting available engine power, as a function of engaged subsystems, and the configuration or configurations of the subsystem or subsystems, such that at least a reasonably close approximation of actual power usage can be determined, and the selected maximum available power will closely match possible needed power. Thus, according to the invention, available engine power is reduced with the removal or recognition of disengagement of different subsystem(s) from the total vehicle configuration, and also with the configuration of operational subsystems, at less than their maximum power consumption. The intent is to provide adequate but not excessive horsepower to the configured vehicle to insure functional and/or mechanical performance is not exceeded.

With current available electronic control systems, utilising a processor based controller, the presence, operation and load of any subsystem (header, straw chopper, etc) can be sensed. According to the invention, from recognition, speed, or load signals, the engine controller would have a predefined table of engine power, e.g., horsepower (HP), levels of which would increase or decrease from a set point the appropriate maximum available power to operate the employed subsystems. As with current unload systems, when the engine controller receives a signal of unloader engagement, the engine is allowed to increase horsepower to offset additional power requirements of the unload system. Also according to the invention, if the straw chopper (large consumer of net horsepower) were removed or not in use, the engine controller will automatically reduce available engine power by the typical chopper power consumption for the selected crop setting, thus not limiting vehicle function but maintaining the appropriate operational power supply to the employed vehicle subsystems, thereby preventing damage, failure or poor functional performance.

Thus, according to the invention, the control is not adding power but limiting or reducing power via mechanical or electronic signal for user defined continuous operation cycles providing overload protection for peripheral subsystems of the subject vehicle.

Examples of an electronic or mechanical signals that can serve as inputs can include, but are not limited to:
- Header recognition circuit. When the header is attached to the combine, the header recognition circuit will identify the header and identify its power consumption from known data, e.g., it will know that the header is a 100 HP consumer or a 30 HP consumer by its identity or configuration.
- Swath / Chopper door position / sensor(s). When the straw chopper subsystem is configured, a mechanical adjustment of components is made to redirect straw flow into or away from the straw chopper. A device or devices in association with the mechanical linkage, such as an electronic position sensor or sensors would provide feed back to the controller which will responsively set the available engine power down when changing from chop to swath mode, and set the available engine power up when in the chop mode.
- Stationary chopper knife bank position sensor. Maximum HP is available when knives are fully engaged, as knives are incrementally retracted to reduce chop length, available engine power is controlled so as to be correspondingly reduced.

The present invention is best understood with reference to the drawings, in which:
Figure 1 is a side view, partially broken away, of an agricultural combine;
Figure 2 is a fragmentary left side view of a separating apparatus and cleaning system of the combine shown in Figure 1;
Figure 3 is a simplified right side view of an interior space of a rear end of the combine, showing a rotary beater for propelling crop residue from the separating apparatus of Figure 2, and a discharge system of the combine;
Figure 4 is another simplified right side view of the interior space and discharge system of Figure 3, with the discharge system configured in a "chop mode" for directing crop residue into a chopper of the combine;
Figure 5 is a simplified right front isometric view of the discharge system of Figure 4 configured in the chop mode;
Figure 6 is a simplified left front isometric view of the discharge system of Figure 4;
Figure 7 is another simplified right side view of the discharge system of Figure 3, configured in a "windrowing mode" for directing crop residue through a rear opening of the body of the combine;
Figure 8 is a simplified right front isometric view of the discharge system of Figure 7;
Figure 9 is a simplified right rear isometric view of the discharge system of Figure 7;
Figure 10 is simplified right side view of the discharge system of Figure 3, configured in a "residue spreading mode";
Figure 11 is a right front isometric view of the discharge system of Figure 10;
Figure 12 is an alternative embodiment, shown in a simplified right side view, of the discharge system as configured in Figure 10, illustrating the pivotal nature of the conveying mechanism;
Figure 13 is a simplified left front isometric view of the discharge system, showing elements of an engine power management control system of the invention;
Figure 14 is another simplified right side view of the discharge system configured in the windrowing mode and showing the states of sensors of the engine power management control system for this configuration;
Figure 15 is another simplified right side view of the discharge system configured in the residue spreading mode and showing the states of sensors of the engine power management control system for this configuration;
Figure 16 is still another simplified right side view of the discharge system configured in the chopping mode and showing the states of sensors of the engine power management control system for this configuration;
Figure 17 is a simplified left side view of the chopper of the combine configured in the chopping mode and showing a bank of stationary knives thereof in a fully extended configuration for chopping crop residue;
Figure 18 is another simplified left side view of the chopper configured in the chopping mode and showing the stationary knives thereof in a fully retracted configuration; and
Figure 19 is still another simplified left side view of the chopper configured in the chopping mode and showing the stationary knives in a partially retracted configuration for chopping crop residue.

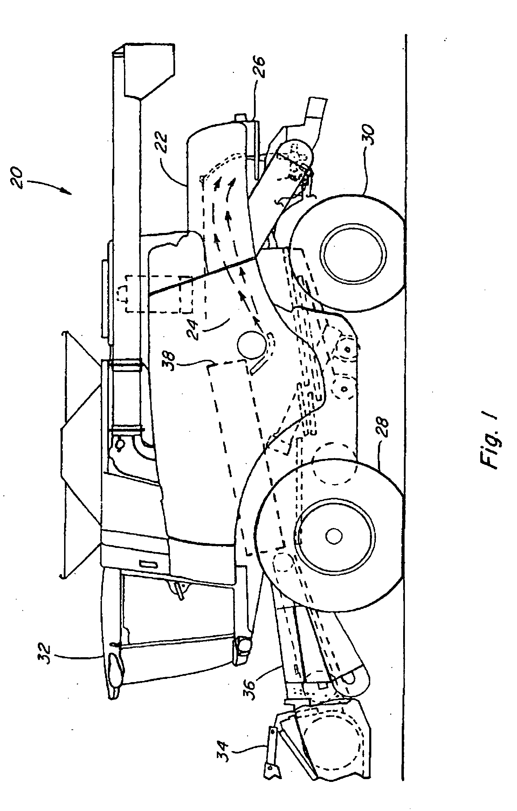

Referring to the drawings, Figure 1 shows a self-propelled rotary combine 20 representative of those with which the automatic control system operable for setting a level of maximum engine power according to the invention, can be used. While a conventional rotary combine is shown, it is anticipated that the present invention could be used with any type of combine, such as a conventional combine having a threshing cylinder and separation beaters (not shown) or a hybrid combine having a threshing cylinder and rotors (not shown). However, for ease of explanation, the present invention will be discussed hereinafter in conjunction with a self-propelled rotary combine 20 as illustrated by Figure 1.

Combine 20 includes a housing or body 22 defining an internal open area or space 24. The body 22 of the combine 20, which can include a supporting frame 26, is supported on front drive wheels 28 and steerable rear wheels 30. The combine 20 is powered by an engine 126 and controlled from an operator's station 32.

A crop harvesting apparatus or subsystem, otherwise referred to as a header 34, and an infeed mechanism 36 are attached at a forward end of the combine 20. The infeed mechanism 36 feeds crop materials to a rotor assembly 38 of a threshing subsystem enclosed within the body. One example of a rotary combine configured with a rotary assembly is disclosed in US-A-5,489,239.

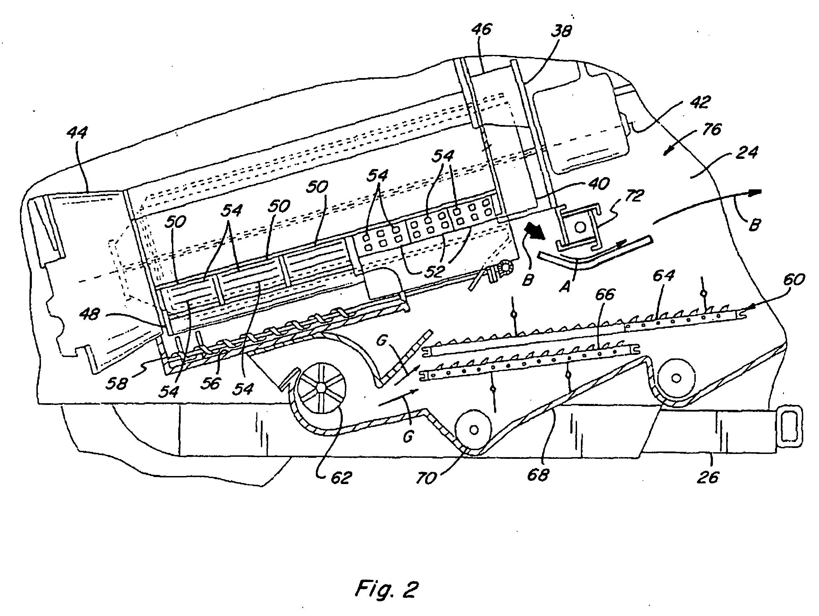

As best shown in Figure 2, the rotor assembly 38 is preferably configured as a single axial unit that threshes and separates crop materials presented thereto into grain and other materials. However, it should be appreciated that the rotary combine 20 could be configured with more than one rotor assembly 38, for example, with two units arranged in a parallel configuration. The rotor assembly 38 is mounted in the internal area defined by the body (Figure 1).

The rotor assembly 38 includes a rotor 40 with a longitudinal extent rotatably mounted to the body 22 about a longitudinal axis of rotation 42, which extends axially along the length of the combine 20. It should be understood that the term "longitudinal" means of or relating to length or the lengthwise dimension. It should also be understood that the rotor 40, with its longitudinal extent, could be mounted within the body 22 so as to extend laterally from side-to-side within the combine 20.

It should be understood that the terms "left side," "right side," "left," "right," "front," "rear," "upper," "lower," "top," and "bottom," and their derivatives, as used herein, are intended to indicate directions relative to the views presented in the Figs., and in particular, from a perspective when viewing the rotary combine 20 of Figure 1, and the internal components thereof, from the steerable rear wheels 30 toward the crop harvesting apparatus.

Referring back to Figure 2, between the upstream, or front end 44, and the downstream, or rear end 46, of the rotor assembly 38, the crop material is threshed as it spirals around the rotor 40 against a concave 48 disposed at least partially, circumferentially around the rotor 40. The rotor 40 can be dimensioned with a broad range of diameters, depending on the desired size and performance characteristics of the combine 20. The rotor 40 is configured with suitable instrumentalities (not shown) mounted on the peripheral surface thereof that cooperate with the concave 48 to thresh the crops introduced therebetween.

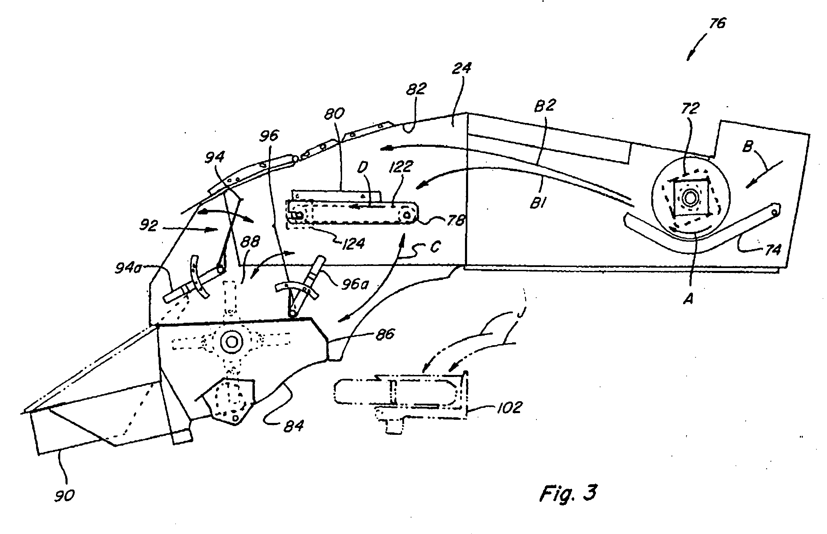

As shown in Figure 2, the concave 48 can include various semicylindrical concave inserts 50 and grate inserts 52, which are generally provided in a lower arcuate fashion and supported by a concave frame (not shown). The concave inserts 50 and grate inserts 52 each have a plurality of apertures 54 that allow the grain to be separated from the other crop material as the grain passes through the apertures 54. Most of the grain drops onto a grain pan 56. The grain is thereafter-conveyed rearward from the grain pan 56 by an auger mechanism 58 (a grain pan can also be used to transport the grain) for subsequent cleaning and collection by a cleaning system 60 and a discharge system 76, which are also subsystems of the combine for the purposes of the invention, as best illustrated in Figure 3. It is also typically desired to operate these systems at selected or designated speeds, without variations resulting from power surges.

The cleaning system 60 cleans chaff, crop residue, tailings and other foreign material from the grain. For example, the cleaning system 60 can include a cleaning fan 62, a chaffer sieve 64, a grain sieve 66, and a clean grain collector 68. A suitable auger mechanism 70 can direct clean grain from the clean grain collector 68 into a hopper or grain bin (not shown). The cleaning fan 62 directs a flow of air, denoted by arrows G, upward and rearwardly through sieves 64 and 66, for blowing the chaff and other particles from the grain.

Crop residue and other waste crop material are impelled rearwardly out of the discharge or rear end 46 of the rotor assembly 38 by the discharge system 76. For example, as illustrated in Figure 2 and more specifically in Figure 3, a rotary beater 72 rotates, as denoted by arrow A to "throw" or propel, as denoted by arrows B1 and B2, an airborne flow of crop residue and other waste material, particularly straw, through the space 24 rearwardly toward the rear end of the space 24 and the combine 20. The discharge beater 72 is preferably positioned above a beater concave 74 to facilitate this function. Such airborne flow of the crop residue will typically comprise elements of varying size, mass and other characteristics that will influence the distance that the elements of the crop residue will be thrown or propelled through the space 24. Again, like the systems discussed above, it is desired to operate beater 72 at a controlled speed.

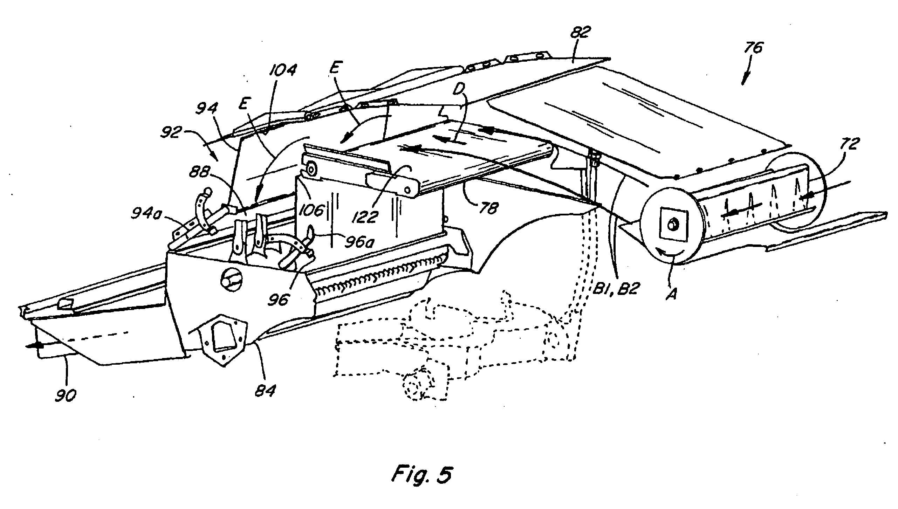

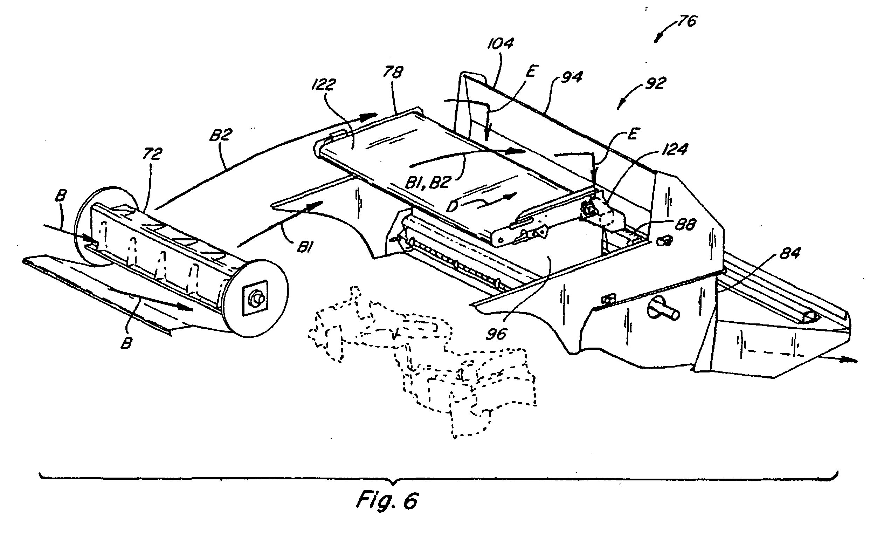

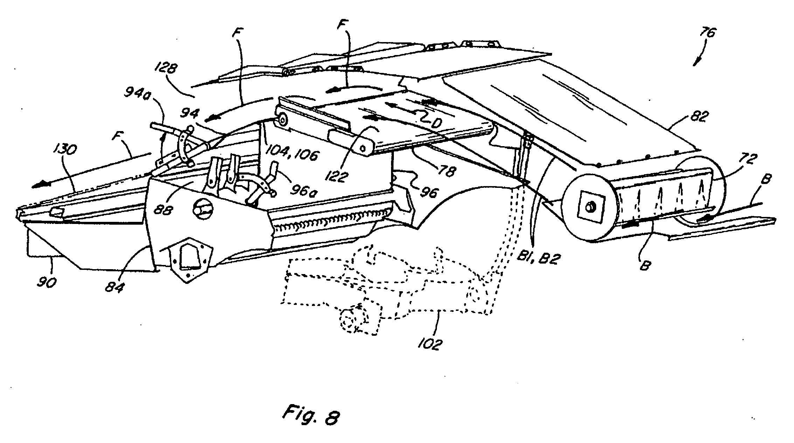

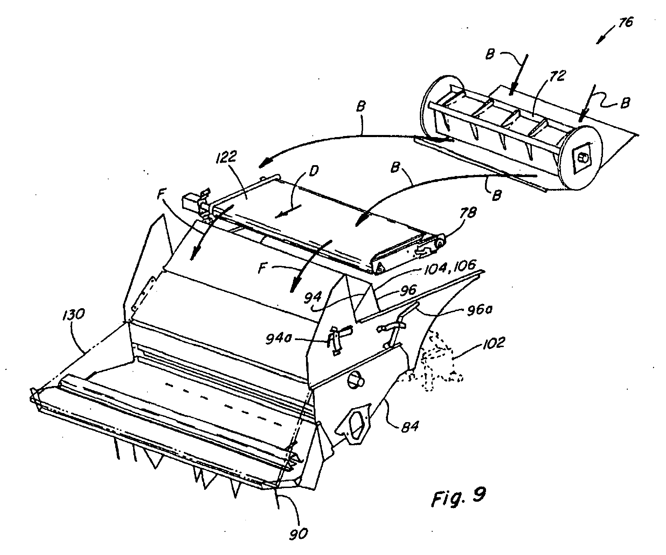

Referring also to Figures 3 through 9, the discharge system 76 illustrated further includes another subsystem which is a conveying mechanism 78, mounted to the body 22 of the combine 20 by a conveyor mount 80 in a position such as that shown, in spanning relation to a portion of the space 24 just below, or in a lower region of, a path of the rearward flow generated by the beater 72, denoted by the arrows B1 and B2. Some combines will not have or require such a mechanism, depending on the configuration, size, etc. of the combine. Advantageously here, the conveying mechanism is positioned in the path of elements of the crop residue flow B, B1 and B2 that would fall short of a desired destination therefor, such as a rearwardly located chopper and/or spreader or an outlet opening. At the position shown, the front end of the conveying mechanism 78 is located above at least a rear end of a chaff spreader device 102, which coincides with a location of most anticipated short falls of crop residue flow B, B1 and B2.

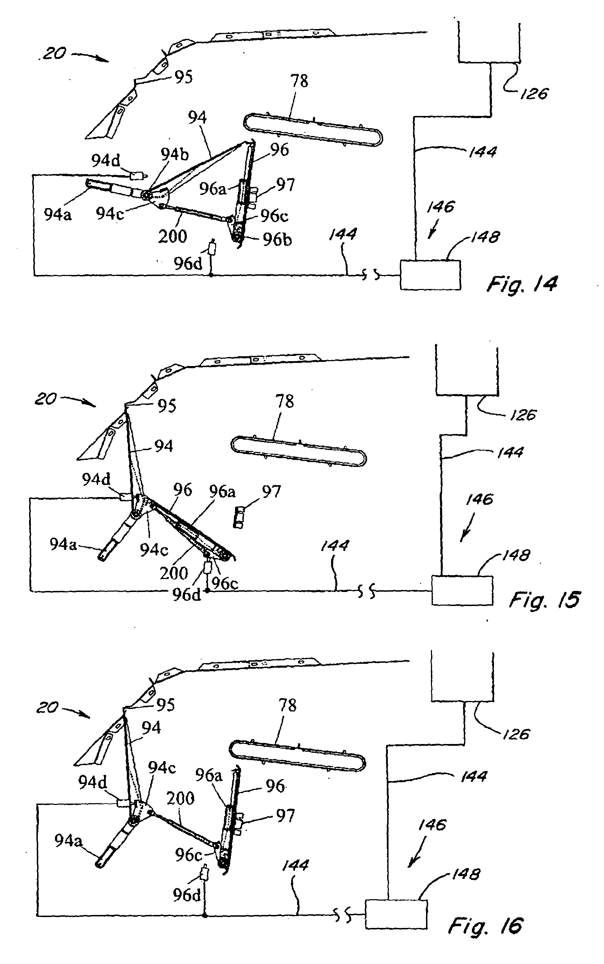

The conveying mechanism 78 can be optionally mounted for pivotal movement in an upward and downward direction, as denoted by arrow C in Figure 3, for operation in an alternative position or configuration, as shown in Figure 14.

The conveying mechanism 78 includes a conveyor drive 124, which can be, for instance, a well known, commercially available hydraulic motor, an electric motor, etc., drivingly rotatable for continuously moving an upwardly facing conveyor surface 122 of conveyor mechanism 78 in the rearward direction, as denoted by arrow D. Conveyor surface 122 is preferably a surface of an endless belt, chain or the like which encircles rollers at the opposite ends of conveying mechanism 78, and can have a generally smooth surface, or a textured surface, or include raised elements thereon, as desired or required for a particular application. The conveyor drive 124 is shown connected in driving relation to one of the rollers for moving conveyor surface 122 in the well known manner.

The conveying mechanism 78 can additionally be optionally rotatable by drive 124 at variable speeds, either under manual control, or automatically responsive to and in adjustment for different characteristics of the crop residue being received and/or other conditions, as represented by one or more predetermined parameters. All drives are indirectly powered by an engine 126.

Located generally below the conveying mechanism 78 are crop residue processing mechanisms or subsystems. For example, a crop residue spreader and/or chopper, represented by a chopper 84 are preferably present below the conveying mechanism 78. It is contemplated that the chopper 84 can be any conventional chopper currently known in the art or any improved version thereof, for chopping and/or spreading crop residue. Regardless, it is preferred that the chopper 84 include a chopper housing 86 having an inlet opening 88 for receipt of crop residue, such as straw. Located rearward of the chopper 84 is preferably a chopper spreader hood or guide 90, for directing the crop residue discharged from chopper 84 in a desired manner over a field. Chopper 84 will be discussed more particularly in regard to the present invention below.

Focusing on Figure 3, it can be seen that another crop residue processing subsystem comprising a guide mechanism 92, is present. The guide mechanism 92 preferably, but not necessarily, includes a door or guide arrangement including at least one pivotal guide or door, such as a pivotal swathing plate 94 and a pivotal chopper selection plate 96, which are pivotable as illustrated by the arrows associated with the respective plates 94, 96. The swathing plate 94 and the chopper selection plate 96 are connected to handles 94a, 96a, respectively, preferably located on the exterior of body 22 and movable for manually positioning the swathing plate 94 and chopper selection plate 96 relative to the chopper 84, to a variety of positions, as shown. Here, it should be noted that the positions of plates 94 and 96 are shown in Figure 3 in random pivotal positions to illustrate the pivotability thereof.

However, it should be appreciated that the guide mechanism 92 could also be remotely automatically, electronically, hydraulically, or mechanically operable and positionable. For instance, each of the doors could be controlled using a common commercially available rotary actuator, a linkage arrangement, or the like (not shown). Finally, located forward of the chopper 84 is a conventional chaff spreader mechanism or device 102, for receiving a flow of chaff, denoted by arrows J.

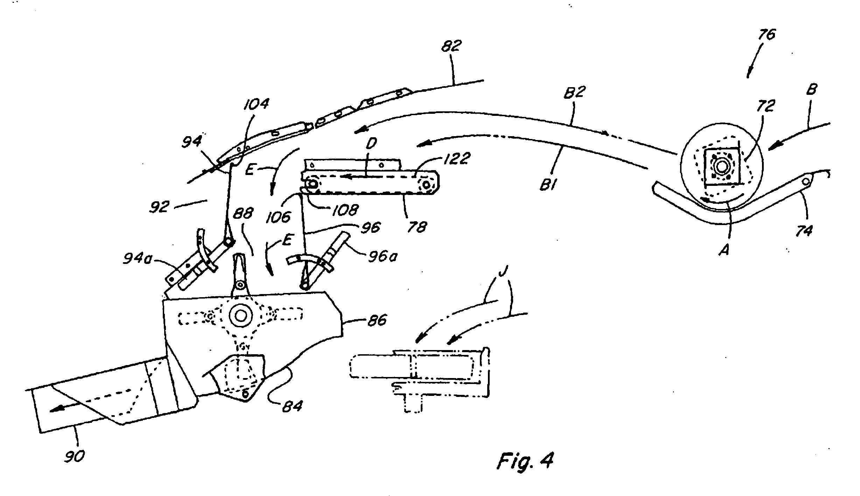

Turning now to Figures 4-6, the "chopping mode" configuration of the discharge system 76 of the present invention is illustrated. Figures 4-6 show the conveying mechanism 78 mounted adjacent to and in spaced relation below, the crop residue hood ceiling 82 of the combine. As illustrated, it is contemplated that the discharge beater 72 will throw or propel a flow of crop residue rearwardly, denoted by arrows B1 and B2, such that some or all of the crop residue, particularly larger elements and wads thereof, represented by arrow B1, will fall or land upon the conveying mechanism 78, and more particularly, on conveyor surface 122, which is moving rearwardly as denoted by arrow D. The moving surface 122 will carry the crop residue deposited thereon rearwardly so as to effectively be merged or mixed with the still airborne crop residue flow B2, which is at the same time being guided downwardly by the hood ceiling 82, so as to reduce the overall vertical extent of the crop residue flows B1 and B2, so as to be more uniform and consistent. The rearward powered movement of surface 122 of conveying mechanism 78 thus facilitates the collection and consolidation or funnelling of the crop residue discharge, and positively delivers it, by way of the guide mechanism 92, to the chopper 84, as denoted by arrows E.

Notably, in this embodiment, the swathing plate 94 is positioned by handle 94a generally vertically so that its leading edge 104 abuts or contacts the crop residue hood ceiling 82, for preventing passage of the crop residue rearwardly of plate 94. Similarly, plate 96 is also positioned using handle 96a generally vertical so that its leading edge 106 abuts or contacts the bottom rear edge 108 of the conveying mechanism 78 (Figure 4), for preventing passage of the crop residue forwardly thereunder. The generally vertical positioning of plate 94 and plate 96 thus direct crop residue into the chopper inlet opening 88 of the chopper 84 for processing thereby.

Consequently, plate 94 disallows exit of the crop residue through the rear of the combine while plate 96 prevents crop residue material from being thrown forward by the chopper 84. Notably, the chaff from the cleaning system 60 remains segregated from the crop residue discharge and is handled by the chaff spreader device 102, as denoted in Figure 4 by arrows J, or is delivered directly to the harvested field below the combine.

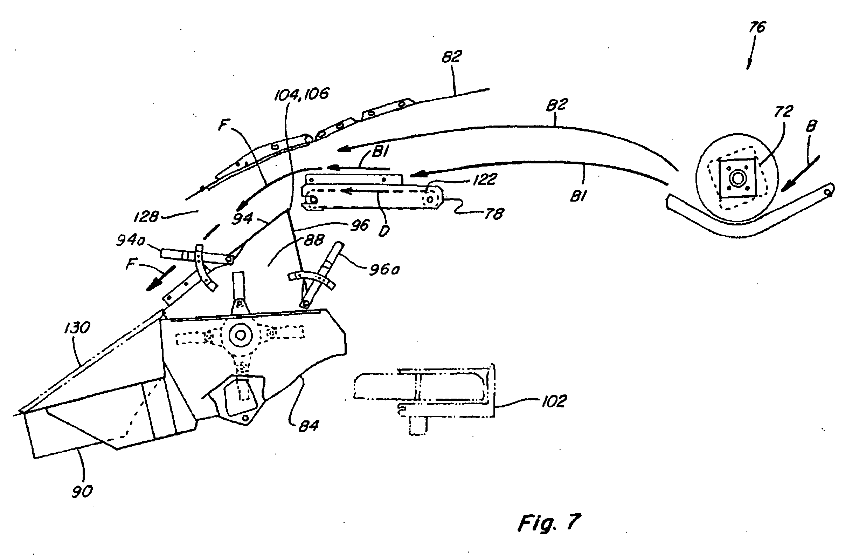

Turning next to Figures 7-9, the "windrow mode" or swathing configuration of the discharge system 76 of the present invention is shown. In the windrow or swathing mode, the elements of the crop residue flow B1 and B2 are merged and mixed and consolidated as discussed above by cooperation of conveying mechanism 78 and hood ceiling 82, but instead of being subsequently directed downwardly into chopper 84, the crop residue flow now identified by arrows F, is directed outwardly from the combine through a rear opening 128. To accomplish this, swathing plate 94 and plate 96 are pivotally positioned using handles 94a and 96a and configured to direct the crop residue flow F over the top of and past the chopper 84, and onto a ramp 130 extending downwardly and rearwardly over the rear end of the chopper 84 and spreader hood 90. If the crop flow is sufficiently large, it will be reduced in overall vertical extent or funnelled by passage between the rear end of the conveying mechanism 78 and hood ceiling 82 so as to exit the rear end of the combine essentially in the form of a continuous, largely cohesive mat. This mat will flow or ride downwardly and rearwardly over ramp 130 and be laid as a windrow onto stubble of a harvested field behind the combine. Chaff is spread from the chaff spreader device 102. In this embodiment, plate 94 and plate 96 converge at their leading edges 104, 106. Accordingly, it is contemplated that generally all the crop residue from the beater (arrows B1 and B2) will be discharged over the chopper 84 to form the windrow. In this configuration, chopper 84 may or may not be operating. An advantage of not operating is that the power to drive chopper 84 is saved. However, crop residue has been found to still enter the chopper housing, through gaps between and around plates 94 and 96, and the like, so as to accumulate and clog the chopper so as to require removal. As a result, some operators prefer to run the chopper even when not in use, which presents still another possible configuration.

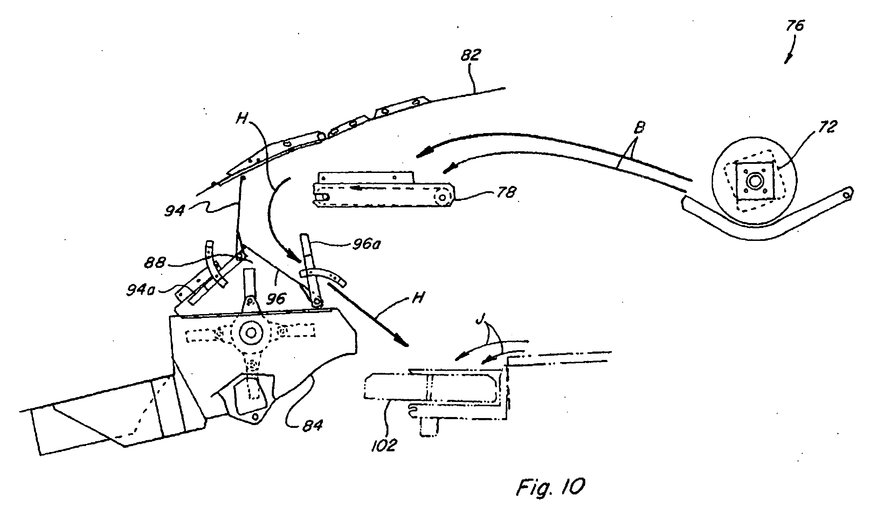

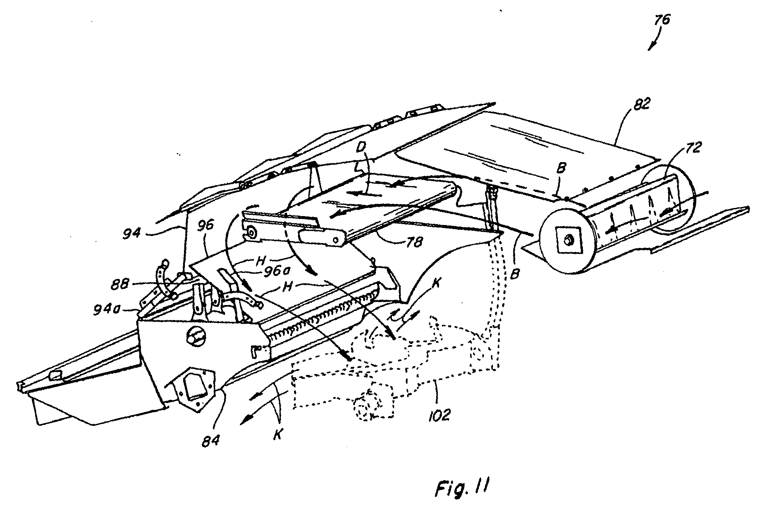

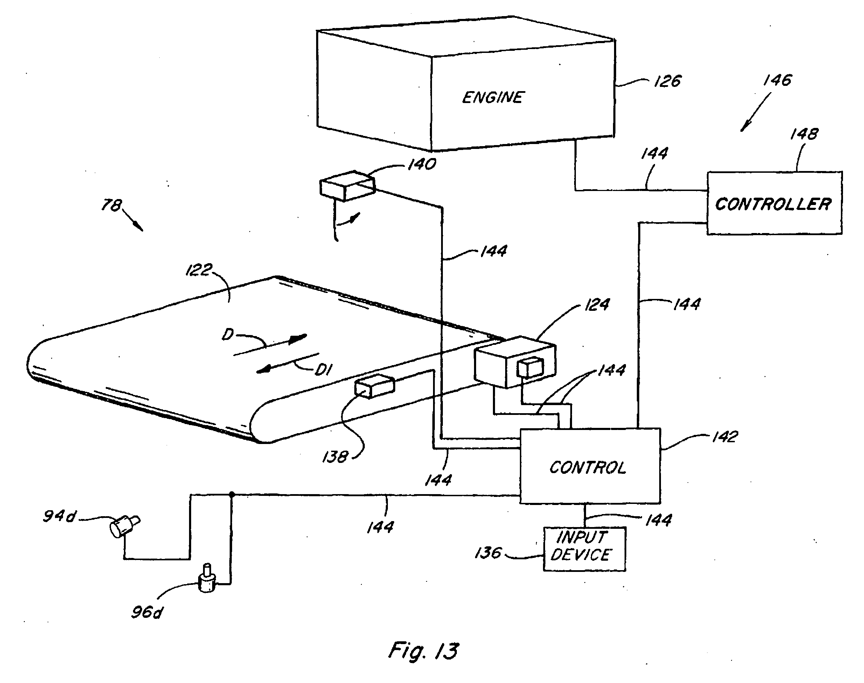

Turning now to Figures 10-12, the "residue spreading mode" or configuration of discharge system 76 is illustrated. Specifically, in Figures 10 and 11, plate 94 and plate 96 are configured using handles 94a and 96a to direct all crop residue (e.g. straw and chaff) into the chaff spreader device 102, as denoted by arrows H. Accordingly, plate 94 is positioned generally vertical to disallow crop residue from being conveyed rearward and outward from the combine while the plate 96 is positioned generally at an angular orientation relative to plate 94 to block the chopper inlet opening 88. Preferably all crop residue material will be diverted forward into the chaff spreader device 102, which will spread it, as denoted by arrows K (see Figure 13). Notably, this mode is particularly useful for handling crops where the residue needs to be spread across the width of the cut, but not chopped. Chaff spreader device 102 also handles the chaff flow, denoted by arrows J.

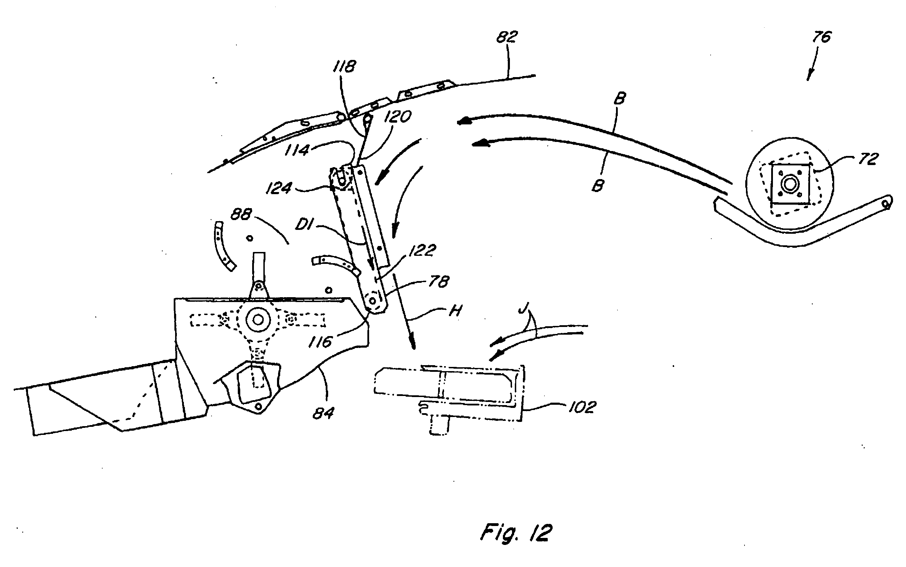

Focusing on Figure 12, illustrated is an alternative configuration of the discharge subsystem 76 in the residue spreading mode. More specifically, as shown, crop residue is diverted directly into the chaff spreader device 102, as denoted by arrows H, by the conveying mechanism 78 which is variably pivoted to an alternative position as shown. It is contemplated that the conveying mechanism 78 can pivot about its rear end 114 as shown, or alternatively, its front end 116, or either of its drive axes, to block travel of the crop residue to the chopper inlet opening 88. A deflector plate 118, which is preferably mounted to the underside of the hood ceiling 82 above conveying mechanism 78, and is positioned generally vertical so that its leading edge 120 abuts a non-moving portion of the conveying mechanism 78. This is intended to prevent rearward flow of the crop material. Again, chaff spreader device 102 also can handle the chaff flow, as denoted by arrows J. Also, the conveying mechanism 78 can be non-rotating, or the direction of rotation of the surface 122 of the conveying mechanism 78 as driven by drive 124 can be reversed, as denoted by arrow D1, to facilitate crop material flow H. Again, it may be desirable to operate the chopper in this configuration, even though blocked off, to prevent clogging.

Referring also to Figure 13, as noted above, the conveyor surface 122 of the conveying mechanism 78 can additionally be optionally automatically moved in directions D and D1 by drive 124 at variable speeds, to provide still further variations or configurations, either under manual control using a suitable input device 136 in operator's station 32 or elsewhere, or automatically, responsive to and in adjustment for different characteristics of the crop residue being received and/or other conditions, as represented by one or more predetermined parameters. Device 136 can comprise an interactive touch screen device, or the like, operable for inputting commands, and also optionally outputting and/or displaying messages and warnings. Such parameters can include, for instance, but are not limited to, parameters sensed or determined by an element or elements of other subsystems of combine 20, including the header 34, the infeed mechanism 36, the rotor assembly 38, and/or the cleaning system 60, and/or sensors associated with the conveying mechanism 78, such as a load sensor 138 associated with surface 122 for sensing a load thereon, or a contact switch 140 disposed above the surface 122 which will make or break an electrical circuit responsive to contact with a mass of crop residue or straw being conveyed by the surface 122 or being fed into one of the processing devices such as the chopper 84, the spreader 102, or rearwardly from the combine. The speed can be controlled by a conventional commercially available processor based speed control, such as control 142, which can be connected to the drive 124 and the sensor and/or switch by a suitable conductive path, such as wires 144 shown. By such control the conveyor 78 can be sped up or slowed down, as required or desired to regulate crop residue flow into the handling device for optimising output therefrom and for regulating the characteristics, such as consistency, cohesiveness and the like, of a windrow.

From the above discussion and examples, it is evident that the various subsystems of combine 20 are configurable in a wide variety of ways, having different engine power requirements, and having different susceptibilities to power surges or variations and resultant problems. It has been found that setting maximum available engine power according to just which subsystems are engaged or activated responsive to system on/off switches alone, is disadvantageous as available power levels must be set to accommodate maximum possible system usage. This is disadvantageous as the available power could thus be set 100 or more HP greater than actual demand, so as to lead to the problems set forth above. Providing extra available power responsive to actual measured usage is also disadvantageous, as it is reactive as opposed to proactive, and is sensitive to intermittent demand spikes and inaccuracies in measured demand, as also set forth above. A better system would provide available maximum power determined initially as a function of the propulsion system and engaged subsystems, and which power is decreased as a function of the different subsystem configurations, yet without requiring an on/off switch for each different configuration, or complicated error prone power measurements.

In Figure 13, and also Figures 14, 15, 16, 17, 18 and 19, elements of a control system 146 of the present invention, automatically operable according to a method of the invention, for setting a level of maximum available engine power initially as a function of propulsion system settings and engaged subsystems, and adjusted downwardly as function of the configurations of the subsystems of combine 20, is shown. System 146 includes a controller 148 which is preferably a processor based controller commonly provided and configured for controlling speed of operation of a combine engine. Controller 148 is connected in operative control of the speed of engine 126, by a conductive path 144. Conductive paths 144 herein can comprise, for instance, wires of a wiring harness of combine 20, and/or a controller area network, data bus or the like. Controller 148 is also illustrated as connected by conductive paths 144 to control 142; to a sensor 94d positioned and operable for sensing a position of plate 94, here, preferably when in the rear position as illustrated in Figures 15 and 16, and outputting signals representative thereof to controller 148; and to a sensor 96d positioned and operable for sensing a position of plate 96, preferably the rear position thereof as illustrated in Figure 15, and also outputting signals representative thereof to the controller. Additionally, controller 148 is connected to a sensor 154 configured for sensing a condition of stationary knives of chopper 84, which condition is preferably a position thereof, or a load thereon; and to a chopper speed sensor 158, for receiving information relating to the configuration and operation of chopper 84. Still further, controller 148 is connected to a number of additional sensors denoted by numbers 160, for receiving information representative of configuration and operation of others of the subsystems of combine 20, including, but not limited to, the header 34, infeed mechanism 36, rotor assembly 38, and/or cleaning system 60. Controller 148 is also connected to an input/display device, such as device 136, operable for use in inputting commands and also displaying warnings and other information.

As discussed above, apart from the threshing subsystem, one of the potentially greatest power consuming subsystems of a combine such as combine 20 is the chopper, represented here by chopper 84. Power demand of chopper 84 can vary from zero, if not engaged; about 20 to 40 HP if engaged but not receiving crop residue flow; and upwards of that range to as much as 150 HP if engaged and receiving a heavy flow of crop residue, and chopping the residue with stationary knives 150 of the chopper fully extended. It is thus desirable for system 146 to be provided with information pertaining to the various possible configuration of chopper 84, particularly, the crop flow status in regard thereto. This can be advantageously obtained from the positions of swathing plate 94 and chopper selection plate 96.

As noted above, plates 94 and 96 can be configured to deflect or guide the crop residue flow along any one of three different paths, using handles 94a and 96a. Handles 94a and 96a are secured to pivot shafts 94b and 96b of the plates 94 and 96, and radially projecting crank arms 94c and 96c are also secured for rotation with the pivot shafts 94b and 96b. Arms 94c and 96c, in turn, are pivotably connected to the opposite ends of a gas strut 200 that acts at all times to push the crank arms 94c and 96c apart. In Figure 14, plates 94 and 96 are in their first or furthest clockwise position, that is, the forward position, corresponding the swathing mode or configuration discussed above. In Figure 15, the two plates are in their second or furthest counterclockwise position, or rear position, corresponding to the spreader mode or configuration. In Figure 16, plate 96 is in its furthest clockwise position but plate 94 is in its furthest counterclockwise position, corresponding to the chopper mode or configuration.

Preferably, spring strut 200 and plate 94 form a toggle mechanism which in all positions other than an unstable over-centre position applies a torque to bias pivot shafts 94b and 96b of both plates towards one of their end positions. Essentially, the over-centre for each is when the line connecting its axis to the connection point of the spring strut 200 coincides with the line of action of the gas strut 200.

In Figure 14, in which the plates are in their furthest clockwise positions, the torque applied by strut 200 biases both plates clockwise thereby urging them into their desired positions and holding them again vibration. Plate 96 is held in an upright position below conveyor 78 against a pair of stops 97 that are affixed to the side panels of the combine. Plate 94 is urged downwardly with its outer edge abutting a transverse slat on the outer edge of plate 96.

If handle 94a is manually turned counterclockwise to set the guide mechanism in the chopper mode of Figure 16, effort must at first be applied to overcome the spring force of gas strut 200. However, once the over-centre position is passed, the spring force of strut 200 will urge plate 94 towards its most counterclockwise position shown in Figure 16. The outer edge of plate 94 is now urged against a notch 95 in a rear top plate of the combine.

The same toggle action while passing through an over-centre position occurs if handle 96 is now moved counterclockwise to set the guide mechanism in the spreader position shown in Figure 15. The strut 200 now urges the outer edge of plate 96 against a lower portion of plate 94. It will be noted that each of plates 94 and 96 passes through an over-centre position when moved between its end positions, regardless of the prevailing position of the other plate. It is advantageous in the present invention for the plates to be spring biased into their end positions by a toggle mechanism in the manner described above. However, it should be emphasised that the plates need not necessarily be manually operated and, if manually operated, a different form of toggle mechanism may be employed to ensure that the plates always lie on one or other of their end positions.

The operator may selectively operate combine harvester 20 in any one of three modes or configurations, namely:
1. small grains - swathing - plate 96 upright - plate 94 down (Figure 14);
2. small grains - straw chopping - plate 96 upright - plate 94 upright (Figure 16); or
3. corn - residue spreading - plate 96 down - plate 94 upright (Figure 15).

It is typically not advisable to chop corn residue, as it degrades quickly on the field. Thus, even distribution of the residue over the harvested field strip is usually what is desired. To this end, corn residue is guided to the spreader 102 (Figures 10 and 11). Straw of wheat and barley, to the contrary, degrades more slowly. The operator may wish to bale it afterwards, in which case the crop residue is swathed, bypassing the straw chopper and deposited in a long, narrow strip behind the combine. Otherwise, the farmer might take no interest in the straw, such that the straw may be chopped and spread over the field for ploughing it into the ground later.

In each of these operating modes or configurations, the various subsystems powered by the engine contribute differently to the total engine loading, as set out in the table below.

| Power requirement | Traction (field travel) | Threshing & separating | Residue handling | Header |
|---|---|---|---|---|
| 1) Small grain swathing | +/- | + | - | - |
| 2) Small grain chopping | +/- | + | + | - |
| 3) Corn | + | - | - | ++ |

In this table, the + symbol denotes greater relative power consumption, the - symbol denotes less. Thus, it is evident that Modes 2 and 3 require more power than Mode 1. When swathing, there is a greater risk of overload because the installed engine is tailored to the power needs of the other modes. For instance, the available power may exceed the mechanical limitations of the threshing rotor driveline.

In the present invention, control system 146 is designed to take into account which subsystems are in operation when setting the maximum engine power. In particular, when a subsystem, such as chopper 84, which requires a large amount of engine power, is not operating, the maximum engine output power is limited, that is, reduced, compared to when the chopper is operating, to prevent the spare engine output capacity from being used to increase the speed of combine harvester 20 over the ground. Driving at higher speed could, as earlier mentioned, result in more crop entering the threshing mechanism of the combine harvester than can safely be handled.

To determine the mode of processing of the crop residue, that is, the configuration of plates 94 and 96, the illustrated preferred embodiment of the invention preferably relies on the use of sensors 94d and 96d to output signals indicate the prevailing positions of the two plates 94 and 96. It is convenient to position and suitably mount sensors 94d and 96d as shown but they may alternatively be attached to handles 94a and 94b or to plates 94 and 96. The fact that the plates are always held firmly in their set positions by a spring force, adds to the reliability of the output signals of the sensors.

The output signals from sensors 94d and 96d, which may for example be mechanically or magnetically operated, are used as inputs to system 146, to enable the system to determine a suitable level of available engine power as a function of the presence or absence of signals therefrom, but can also be used to generate an alarm when the crop residue is flowing into chopper 84 while the chopper drive is disengaged or to warn the operator to lower a spreader hood 90 at the outlet of the straw chopper while the combine harvester is in swathing mode.

As noted above, sensor 94d is positioned to sense when plate 94 is in its rear position. The absence of a signal from sensor 94d can also be used to indicate that plate 94 is in the swathing position and therefore such an absence of a signal can be interpreted by controller 148 as an indicator to limit engine output power. Using the absence of a signal to trigger a power reduction results in a failsafe operation in that power will also be reduced when sensor 94d is faulty or wrongly positioned. The operator would be alerted to such a defect by a reduction in engine output power when combine 20 is in the chopping or spreading mode.

Sensor 96d associated with chopper selection plate 96 acts in conjunction with sensor 94d associated with swathing plate 94 and a chopper speed or rotation sensor (if utilised), to provide a warning system to the operator to avoid obstruction of the residue flow when chopping and to avoid the chopper running unnecessarily when operating in the swathing mode or the spreading mode.

The control system 146 comprises a warning system that should warn the operator of a risk of blockage when the following combination occurs:
- the chopper 84 is not running
- the swathing plate (rear plate 94) is in the rear position and
- the chopper selection plate (front plate 96) is in the front position.

This gives the operator the informed option to continue operating chopper 84, for such purposes as maintaining the chopper clear of crop residue so as not to become clogged or plugged.

Once again, for failsafe reasons, sensor 96d for chopper selection plate 96 should preferably detect when it is in the rear position, in which it obstructs the chopper inlet 88. When sensor 96d does not detect plate 96 due to a faulty or badly adjusted sensor and the chopper 84 is running, the operator will still be warned that there is a risk of plugging above the straw chopper.

The system 146 can also inform the driver when one of the following combinations occurs:
- the chopper 84 is running and
- the swathing plate 94 is in the front position
   or when
- the chopper 84 is running and
- the chopper selection plate 96 is in the rear position.

This means that the chopper is running idle because one or other of the plates is guiding any crop residue past the chopper.

This information can help to safe fuel. If the sensor 94d, which detects the swathing plate 94, is badly adjusted while the combine 20 is in the chopping mode, this sensor 94d will see no swathing plate, as if the system was set for swathing, and the control system 146 will needlessly reduce the power of the engine. However the system will also generate the information to the operator that the chopper 84 is running idle. The appearance of this message will constitute a hint to the operator that the system is not working properly and he has to make some adjustments.

The provision of sensors as described above can also serve to avoid straw hood plugging when swathing. In particular, the warning system can inform the operator when the swathing plate 94 is in the front position that the recommended position of the spreader hood 90 at the chopper outlet (shown in EP-A-1 529 434) is the down position. This can avoid straw hood plugging (especially when running down hill). This warning need only be given once, when the swathing plate is changed from chopping (rear position) to swathing position (front position).

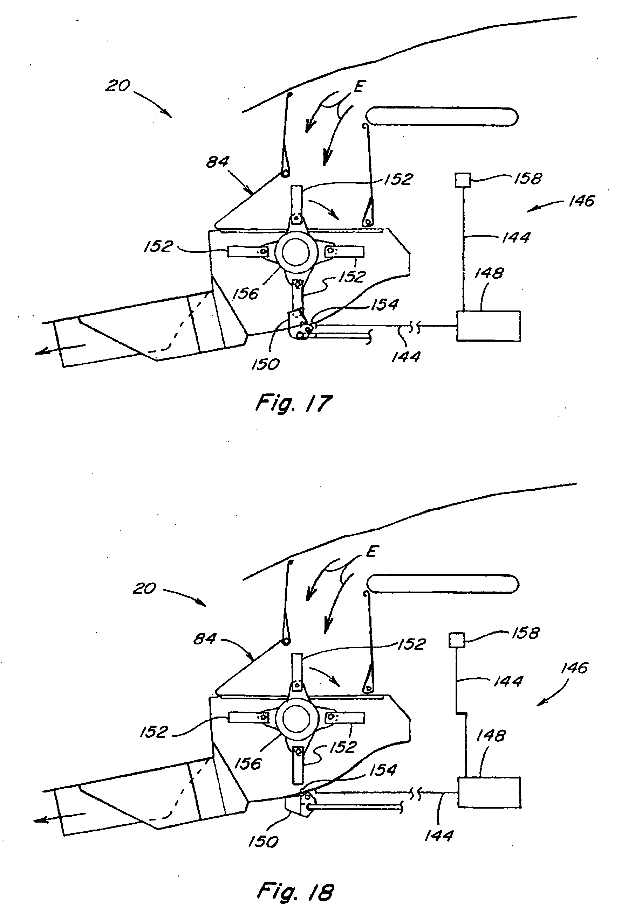

Thus, according to a method of the invention, the absence of signals from both sensors 94d and 96d will provide input information to controller 148 of system 146 that swathing plate 94 is in its forward position; and chopper selection plate 96 is in its forward position, indicating the swathing configuration (Figure 14), and controller 148 will automatically reduce the level of available engine power accordingly. In particular, controller 148 is configured and automatically operable such that, if the operator has chosen to disengage chopper 84, controller 148 will reduce available power by a greater amount, and if the chopper is engaged, but bypassed, controller 148 will still reduce the power, but by a lesser amount. Chopper speed data from a chopper drive speed or rotation sensor 158 (Figures 17-19), if present, can be used as a further factor in the speed adjustment.

The presence of signals from both sensors 94d and 96d will provide input information to controller 148 that swathing plate 94 is in its rear position; and chopper selection plate 96 is in its rear position, indicating the spreading configuration (Figure 15), and controller 148 will automatically set engine power accordingly. Again, if the operator has chosen to disengage chopper 84, or engage it, this information will automatically be factored into the power setting: more reduction if not engaged, less reduction if engaged. Chopper speed data from the chopper drive speed sensor 158 (Figures 17-19), if present, can also be used as a factor.

The presence of signals from sensors 94d, but not sensor 96d will provide information to controller 148 that swathing plate 94 is in its rear position; and chopper selection plate 96 is in its forward position, indicating the chopping configuration (Figure 16), and controller 148 will automatically set engine power accordingly. Here, chopper 84 of course will be engaged, and chopper speed data from the chopper drive speed sensor 158 (Figures 17-19), if present, can also be used as a factor in determining power. Again, chopping is a high power consuming operation, and the set power level will be considerably higher than for a non-chopping configuration.

Addressing chopper speed specifically, combine harvesters are often equipped with a sensor monitoring the rotation speed of the straw chopper. It would be possible to use a signal from the latter sensor (sensor 158 in present example) to indicate to the controller when the combine is operating in the swathing mode. However, the position of the swathing plate is the preferred criterion for setting the reduction of engine power, because while swathing, the chopper may or may not be engaged. Similarly, monitoring the chopper rotation alone may be disadvantageous when harvesting corn, because, again, the chopper may be engaged or disengaged, per the operator's preference.

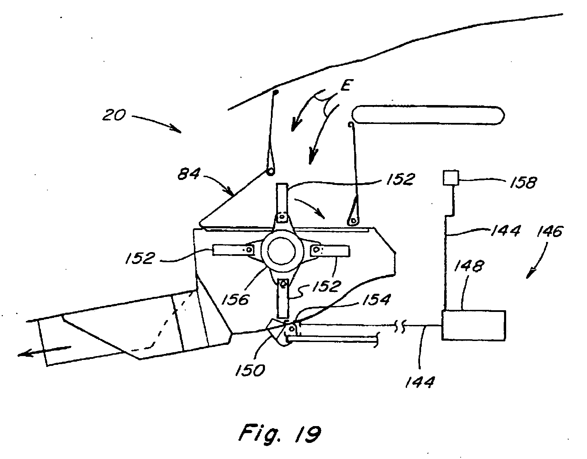

Referring more particularly to Figures 17, 18 and 19, chopper 84 includes a rotary impeller 156 rotatably driven by the chopper drive, as indicated by the associated arrow, in the well-known manner. Impeller 156 carries a plurality of flail knives 152 which chop the crop residue which enters chopper 84, as denoted by arrows E. An array or rack of stationary knives 150 are movable between at least a fully extended position (Figure 17) extending into chopper 84 between adjacent ones of flail knives 152, and a fully retracted position (Figure 18), a representative partially retracted position being exhibited in Figure 19. A sensor 154 is preferably disposed in association with knives 150, and is configured in operable for outputting a signal representative of the position of knives 150. Alternatively, or additionally, it is contemplated that a load sensor operable for sensing applied loads on knives 150 could be used. Sensor 154 is connected via a conductive path 144 to controller 148 of system 146, as is sensor 158. In the chopping mode or configuration, the signal representative of the position of knives 150, and the speed of the chopper, if known, can be utilised by controller 148 as another factor in the determining of a value for power consumption of chopper 84 (fully extended equals more power; partially retracted equals less power; and fully retracted equals still less power), for reducing the maximum available power accordingly. Thus, this provides yet another indicator of crop residue processing configuration usable for determining a reduction in maximum available power to be applied to the operation of the engine.

Thus, as an important advantage, the system and method of the invention will utilise reliable, relatively simple indicators of operating subsystem configuration, for determining and setting maximum available engine power, so as to more closely match anticipated needs compared to systems that rely solely on subsystem engagement status, and potentially more accurately than those that rely on sensed actual power consumption.

Although an exemplary embodiment of the system and method of the invention has been shown and described with reference to particular embodiments and applications thereof, it will be apparent to those having ordinary skill in the art that a number of changes, modifications, or alterations to the invention as described herein may be made, none of which depart from the scope of the present invention as defined by the accompanying claims.

## Claims

1. A combine harvester (20), comprising:
an engine (126) for driving the harvester and for powering subsystems thereof including at least a threshing mechanism (38, 48, 52) operable for separating harvested crop into grain and crop residue, and a straw chopper (84), the straw chopper being engageable for receiving and chopping at least a portion of the crop residue and propelling the chopped residue from the harvester (20), and a device (150/158) operable for outputting a signal representative of status of the engagement of the chopper (84);
an engine control system (146) including a controller (148) connected in operative control of the engine (126), and to the device (150/158) for receiving the signal therefrom, the controller (148) being configured and operable for automatically determining and setting a maximum available engine power limit as a function of at least the status of the engagement of the chopper (84),
**characterised in that:**
the harvester (20) further comprises structure (94, 96) configurable for directing the crop residue along a path (E) into the chopper (84), and along at least one alternative path (F/H) to bypass the chopper (84), and at least one device (94d, 96d) operable for outputting a signal representative of the configuration of the structure to the controller (148); and
the controller (148) is configured and operable for reducing the limit as a function of at least the configuration of the structure (94, 96) for directing the crop residue.

2. A combine harvester according to claim 1, **characterised in that** the chopper (84) includes:
a plurality of stationary knives (150) positionable in a fully extended position which will require the chopper (84) to use a first level of engine power, and at least one retracted position which will require a level of engine power less than the first level;
and a device (154) for determining the position of the stationary knives (150) and outputting a signal representative thereof to the controller (148),
the controller (148) being automatically operable for adjusting the maximum available engine power limit as a function of the position of the knives (150).

3. A combine harvester according to claim 2, **characterised in that** the controller (148) is automatically operable for reducing the maximum available engine power limit if the knives (150) are in the at least one retracted position.

4. A combine harvester according to any of the preceding claims, **characterised in that**:
the structure (94, 96) for directing the crop residue comprises a swathing plate (94) positionable in a swathing position for directing the crop residue rearwardly from the harvester (20), and in a chopping position for directing the crop residue into the chopper (84); and
the at least one device operable for outputting a signal representative of the configuration of the structure (94, 96) comprises a sensor (94d) configured and operable for sensing when the swathing plate (94) is in at least one of the positions thereof.

5. A combine harvester according to claim 4, **characterised in that** the sensor (94d) is operable for sensing the swathing plate (94) when in the chopping position and outputting a signal representative thereof.

6. A combine harvester according to claim 4 or 5, **characterised in that**:
the structure (94, 96) for directing the crop residue additionally comprises a chopper selection plate (96) positionable in a chopping position for directing the crop residue into the chopper (84) in cooperation with the swathing plate (94) when in the chopping position thereof, the chopper selection plate (96) also being positionable in a non-chopping position for preventing entry of the crop residue into the chopper (84); and
the at least one device operable for outputting a signal representative of the configuration comprises a sensor (96d) configured and operable for sensing at least one of the positions of the chopper (84) selection plate (96).

7. A combine harvester according to claim 6, **characterised in that** the sensor (96d) for sensing at least one of the positions of the chopper selection plate (96) is operable for sensing the chopper selection plate (96) when in the non-chopping position and outputting a signal representative thereof.

8. A combine harvester according to any of the claims 4 to 7, **characterised in that** the controller (148) is programmed to automatically determine the configuration of the structure (94, 96) for directing the crop residue, as a function of the outputted signals, and to set the maximum available engine (126) power limit at a first value when the signals represent that the structure (94, 96) is configured for directing the crop residue into the chopper (84), and to reduce the limit when the signals represent that the structure (94, 96) is configured for directing the crop residue along a path (F/H) to bypass the chopper (84).

9. A combine harvester according to claim 8, **characterised in that** the controller (148) is programmed to further reduce the limit, compared to when the chopper (84) is engaged, if the signals represent that the structure (94, 96) is configured for directing the crop residue to bypass the chopper (84) and the chopper (84) is disengaged.

10. A combine harvester according to any of the preceding claims, **characterised in that** the device operable for outputting a signal representative of status of engagement of the chopper (84) comprises a sensor (158) for monitoring the rotation speed of the chopper (84).

11. A combine harvester according to claim 10, **characterised in that** the engine control system (146) includes a warning system (146, 136) operative to warn the operator of a risk of blockage when the chopper (84) is not running, while the structure (94, 96) for directing the crop residue is configured for directing the crop residue into the chopper (84).

12. A combine harvester according to claim 10 or 11, **characterised in that** the engine control system (146) includes a warning system (146, 136) operative to warn the operator when the chopper (84) is running, while the structure (94, 96) for directing the crop residue is configured for directing the crop residue to bypass the chopper (84).

13. A combine harvester according to claim 4, or any claim dependent thereon, **characterised in that** the engine control system (146) includes a warning system (146, 136) operative to warn the operator to adjust the position of an element (90) in the flow path (F) of the crop residue behind the swathing plate (94) when the swathing plate (94) is in the swathing position.

14. A combine harvester according to claim 13, **characterised in that** the element behind the swathing plate (94) comprises a spreader hood (90) adjacent the outlet of the residue chopper (84).

15. A method of controlling a maximum available engine power limit of a combine harvester (20), comprising:
- providing an engine (126) for driving the harvester (20) and for powering subsystems including at least a threshing mechanism (38, 48 52) operable for separating harvested crop into grain and crop residue, and a straw chopper (84), the straw chopper being engageable for chopping at least a portion of the crop residue and propelling the chopped residue from the harvester (20), and a device (154/158) operable for outputting a signal representative of a status of the engagement of the chopper (84);
- providing an engine control system (146) including a controller (148) connected in operative control of the engine (126), and to the device (154/158) for receiving the signal therefrom; and
- automatically operating the controller (148) to determine and set the maximum available engine power limit as a function of at least the number and identity of the subsystems engaged; and
**characterised in that** it further comprises:
- providing structure (94, 96) configurable for directing the crop residue along a path (E) into the chopper (84), and along at least one alternative path to bypass the chopper (84), and at least one device (94d, 96d) operable for outputting a signal representative of the configuration of the structure (94, 96) to the controller (148);
- automatically operating the controller (148) to reduce the maximum available engine power limit as a function of at least the configuration of the structure (94, 96) for directing the crop residue, including if the structure (94, 96) is configured for directing the crop residue to bypass the chopper (84).

16. A method according to claim 15, **characterised in that** the chopper (84) includes:
a plurality of stationary knives (150) positionable in a fully extended position which will require the chopper (84) to use a first level of engine power, and at least one retracted position which will require the chopper (84) to use a level of engine power less than the first level; and
a device (154) for determining the position of the stationary knives (150) and outputting a signal representative thereof to the controller (148),
wherein the controller (148) will automatically reduce the maximum available engine power limit if the knives (150) are in the at least one retracted position.

17. A method according to claim 15 or 16, **characterised in that**:
the structure (94, 96) for directing the crop residue comprises 3 swathing plate (94) positionable in a swathing position for directing the crop residue rearwardly from the combine, and in a chopping position for directing the crop residue into the chopper (84); and
the at least one device operable for outputting a signal representative of the configuration of the structure (94, 96) comprises a sensor (94d), which senses when the swathing plate (94) is in at least one of the positions thereof.

18. A method according to claim 17, **characterised in that** the sensor (94d) senses the swathing plate (94) when in the chopping position and outputs a signal representative thereof.

19. A method according to claim 17 or 18, **characterised in that**:
the structure (94, 96) for directing the crop residue additionally comprises a chopper selection plate (96) positionable in a chopping position for directing the crop residue into the chopper (84) in cooperation with the swathing plate (94) when in the chopping position thereof, the chopper selection plate (96) also being positionable in a non-chopping position for preventing entry of the crop residue into the chopper (84); and
the at least one device operable for outputting a signal representative of the configuration comprises a sensor (96d) configured and operable for sensing at least one of the positions of the chopper selection plate (96).

20. A method according to claim 19, **characterised in that** the sensor (96d) for sensing at least one of the positions of the chopper selection plate (96) is operable for sensing the chopper selection plate (96) when in the non-chopping position and outputting a signal representative thereof.

21. A method according to any of the claims 17 to 20, **characterised in that** the controller (148) automatically determines the configuration of the structure (94, 96) for directing the crop residue, as a function of the outputted signals, and sets the maximum available engine power limit at a first value when the signals represent that the structure (94, 96) is configured for directing the crop residue into the chopper (84), and reduces the limit when the signals represent that the structure (94, 96) is configured for directing the crop residue along a path to bypass the chopper (84).

22. A method according to claim 21, **characterised in that**, if the signals represent that the structure (94, 96) is configured for directing the crop residue to bypass the chopper (84) and the chopper (84) is disengaged, the controller (148) will further reduce the limit, compared to when the chopper (84) is engaged.

## Patentansprüche

1. Mähdrescher (20) mit:
einem Motor (126) zum Antrieb des Mähdreschers und zur Leistungsversorgung von Teilsystemen hiervon, unter Einschluss von zumindest einem Dreschmechanismus (38, 48, 52), der zum Trennen geernteten Erntematerials in Körner und Erntematerialreste betreibbar ist, und einem Strohhäcksler (84), wobei der Strohhäcksler einschaltbar ist, um zumindest einen Teil der Erntereste aufzunehmen und zu häckseln und um den gehäckselten Ernterest von dem Mähdrescher (20) fort auszustoßen, und einer Einrichtung (150/158), die betreibbar ist, um ein Signal abzugeben, das den Status des Einschaltens des Häckslers (84) darstellt;
einem Motorsteuersystem (146), das ein Steuergerät (148) einschließt, das in betriebsmäßiger Steuerung mit dem Motor (126) und mit der Vorrichtung (150/158) zum Empfang des Signals von diesen verbunden ist, wobei das Steuergerät (148) zum automatischen Bestimmen und Einstellen de maximal verfügbaren Motorleistungs-Grenzwertes als eine Funktion zumindest des Einschaltzustandes des Häckslers (84) konfiguriert und betreibbar ist;
**dadurch gekennzeichnet, dass:**
der Mähdrescher (20) weiterhin eine Struktur (94, 96), die zum Lenken des Erntematerial-Restes entlang eines Pfades (E) in den Häcksler (84) und entlang zumindest eines alternativen Pfades (F/H) zur Umgehung des Häckslers (84) konfigurierbar ist, und zumindest eine Einrichtung (94d, 96d) umfasst, die betreibbar ist, um ein die Konfiguration der Struktur darstellendes Signal an das Steuergerät (148) abzugeben; und
das Steuergerät (148) zum Reduzieren des Grenzwertes als eine Funktion von zumindest der Konfiguration der Struktur (94, 96) zum Lenken des Erntematerial-Restes konfiguriert und betreibbar ist.

2. Mähdrescher nach Anspruch 1, **dadurch gekennzeichnet, dass** der Häcksler (84) Folgendes einschließt:
eine Vielzahl von stationären Messern (150), die auf eine vollständig ausgefahrene Position, die es erforderlich macht, dass der Häcksler (84) einen ersten Pegel der Motorleistung verwendet, und auf zumindest eine zurückgezogene Position einstellbar sind, die einen Pegel der Motorleistung erfordert, der kleiner als der erste Pegel ist;
und eine Vorrichtung (154) zum Feststellen der Position der stationären Messer (150) und zur Ausgabe eines Signals, das diese darstellt, an das Steuergerät (148);
wobei das Steuergerät (148) automatisch betreibbar ist, um den maximal verfügbaren Motorleistungs-Grenzwert als eine Funktion der Position der Messer (150) einzustellen.

3. Mähdrescher nach Anspruch 2, **dadurch gekennzeichnet, dass** das Steuergerät (148) automatisch betreibbar ist, um den maximal verfügbaren Motorteistungs-Grenzwert zu verringern, wenn sich die Messer (150) in der zumindest einen zurückgezogenen Stellung befinden.

4. Mähdrescher nach einem der vorhergehenden Ansprüche, **dadurch gekennzeichnet, dass**:
die Struktur (94, 96) zum Lenken des Erntematerial-Restes eine Schwadbildungsplatte (94) umfasst, die in einer Schwadbildungsposition zum Lenken des Erntematerial-Restes in Rückwärtsrichtung von der Erntemaschine (20) fort und auf auf eine Häckselposition zum Lenken des Erntematerial-Restes in den Häcksler (84) einstellbar ist; und
die zumindest eine Einrichtung, die betreibbar ist, um ein die Konfiguration der Struktur (94, 96) darstellendes Signal abzugeben, einen Sensor (94d) umfasst, der zum Abtasten konfiguriert und betreibbar ist, ob sich die Schwadbildungsplatte (94) in zumindest einer ihrer Positionen befindet.

5. Mähdrescher nach Anspruch 4, **dadurch gekennzeichnet, dass** der Sensor (94d) betreibbar ist, um die Schwadbildungsplatte (94) abzutasten, ob sie sich in der Häckselposition befindet, und um ein dieses darstellendes Signal abzugeben.

6. Mähdrescher nach Anspruch 4 oder 5, **dadurch gekennzeichnet, dass**:
die Struktur (94, 96) zum Lenken des Erntematerial-Restes zusätzlich eine Häcksler-Auswahlplatte (96) umfasst, die in einer Häckselposition zum Lenken des Erntematerial-Restes in den Häcksler (84) im Zusammenwirken mit der Schwadbildungsplatte (94) einstellbar ist, wenn sich diese in der Häckselposition befindet, wobei die Häcksler-Auswahlplatte (96) weiterhin in einer Nicht-Häcksel-Position anzuordnen ist, um den Eintritt des Erntematerial-Restes in den Häcksler (84) zu verhindern; und
die zumindest eine Einrichtung, die zur Abgabe eine die Konfiguration darstellenden Signals betreibbar ist, einen Sensor (96d) umfasst, der zum Abtasten zumindest einer der Positionen der Auswahlplatte (96) des Häckslers-(84) konfiguriert und betreibbar ist.

7. Mähdrescher nach Anspruch 6, **dadurch gekennzeichnet, dass** der Sensor (96d) zum Feststellen zumindest einer der Positionen der Häcksler-Auswahlplatte (96) betreibbar ist, um die Häcksler-Auswahlplatte (96) abzutasten, wenn sie sich in der Nicht-Häcksel-Position befindet, und um ein dieses darstellendes Signal abzugeben.

8. Mähdrescher nach einem der Ansprüche 4 bis 7, **dadurch gekennzeichnet, dass** das Steuergerät (148) so programmiert ist, dass es automatisch die Konfiguration der Struktur (94, 96) zum Lenken des Erntematerial-Restes als eine Funktion der abgegebenen Signale bestimmt, und dass es den maximal verfügbaren Leistungsgrenzwert des Motors (126) auf einen ersten Wert einstellt, wenn die Signale darstellen, dass die Struktur (94, 96) zum Lenken des Erntematerial-Restes in den Häcksler (84) konfiguriert ist, und den Grenzwert verringert, wenn die Signale darstellen, dass die Struktur (94, 96) zum Lenken des Erntematerial-Restes entlang eines Pfades (F/H) zur Umgehung des Häckslers (84) konfiguriert ist.

9. Mähdrescher nach Anspruch 8, **dadurch gekennzeichnet, dass** das Steuergerät (148) so programmiert ist, dass es weiterhin den Grenzwert verglichen mit dem Fall verringert, in dem der Häcksler (84) eingeschaltet ist, wenn die Signale darstellen, dass die Struktur (94, 96) zum Lenken des Erntematerial-Restes zur Umgehung des Häckslers (84) konfiguriert ist, und der Häcksler (84) abgeschaltet ist.

10. Mähdrescher nach einem der vorhergehenden Ansprüche, **dadurch gekennzeichnet, dass** die Einrichtung zur Abgabe eines Signals, das den Status des Einschaltens des Häckslers (84) darstellt, einen Sensor (158) zur Überwachung der Drehgeschwindigkeit des Häckslers (84) umfasst.

11. Mähdrescher nach Anspruch 10, **dadurch gekennzeichnet, dass** das Motorsteuersystem (146) ein Warnsystem (146, 136) einschließt, das betreibbar ist, um den Fahrer vor der Gefahr eines Blockierens zu warnen, wenn der Häcksler (84) nicht läuft, während die Struktur (94, 96) zum Lenken des Erntematerial-Restes zum Lenken des Erntematerial-Restes in den Häcksler (84) konfiguriert ist.

12. Mähdrescher nach Anspruch 10 oder 11, **dadurch gekennzeichnet, dass** das Motorsteuersystem (146) ein Wamsystem (146, 136) einschließt, das betreibbar ist, um den Fahrer zu warnen, wenn der Häcksler (84) läuft, während die Struktur (94, 96) zum Lenken des Erntematerial-Restes so konfiguriert ist, dass sie den Erntematerial-Rest für eine Umgehung des Häckslers (84) lenkt.

13. Mähdrescher nach Anspruch 4 oder irgendeinen hiervon abhängigen Anspruch, **dadurch gekennzeichnet, dass** das Motorsteuersystem (146) ein Wamsystem (146, 136) einschließt, das betreibbar ist, um den Fahrer einen Wamhinweis für die Einstellung der Position eines Elementes (90) in dem Strömungspfad (F) des Erntematerial-Restes hinter der Schwadbildungsplatte (94) zu geben, wenn sich die Schwadbildungsplatte (94) in der Schwadbildungsposition befindet.

14. Mähdrescher nach Anspruch 13, **dadurch gekennzeichnet, dass** das Element hinter der Schwadbildungsplatte (94) eine Verteilerhaube (90) benachbart zu dem Auslass des Erntematerial-Rest-Häckslers (84) umfasst.

15. Verfahren zum Steuern eines maximal verfügbaren Motorleistungs-Grenzwerts eines Mähdreschers (20), mit den folgenden Schritten:
- Bereitstellen eines Motors (126)) zum Antrieb des Mähdreschers (20) und zur Leistungsversorgung von Teilsystemen, die zumindest einen Dreschmechanismus (38, 48, 52), der zum Trennen von geerntetem Erntematerial in Körner und Erntematerial-Rest betreibbar ist, und einen Strohhäcksler (84) einschließen, wobei der Strohhäcksler einschaltbar ist, um zumindest einen Teil des Erntematerial-Restes zu häckslen und um den gehäckselten Rest von der Erntemaschine (20) fort anzutreiben, sowie eine Einrichtung (154/158), die betreibbar ist, um ein Signal abzugeben, das den Status des Einschaltens des Häckslers (84) darstellt;
- Bereitstellen eines Motor-Steuersystems (146), das ein Steuergerät (148) einschließt, das in betriebsmäßiger Steuerung mit dem Motor (126) und dem Gerät (154/158) zum Empfang eines Signals hiervon verbunden ist; und
- automatisches Betreiben des Steuergerätes (148) zur Feststellung und Einstellung des maximal verfügbaren Motorleistungs-Grenzwerts als eine Funktion von zumindest der Anzahl und Identität der eingeschalteten Teilsysteme; und
**dadurch gekennzeichnet, dass** das Verfahren weiterhin Folgendes umfasst:
- Bereitstellen einer Struktur (94, 96), die konfigurierbar ist, um den Erntematerial-Rest entlang eines Pfades (E) in den Häcksler (84) und entlang eines alternativen Pfades zur Umgehung des Häckslers (84) zu lenken, und zumindest einer Einrichtung (94d, 96d), die betreibbar ist, um ein die Konfiguration der Struktur (94, 96) darstellendes Signal an das Steuergerät (148) abzugeben;
- automatisches Betreiben des Steuergerätes (148) zum Verringern des maximal verfügbaren Motorleistungs-Grenzwerts als eine Funktion von zumindest der Konfiguration der Struktur (94, 96) zum Lenken des Erntematerial-Restes, unter Einschluss, wenn die Struktur (94, 96) zum Lenken des Erntematerial-Restes zur Umgehung des Häckslers (84) konfiguriert ist.

16. Verfahren nach Anspruch 15, **dadurch gekennzeichnet, dass** der Häcksler (84) Folgendes einschließt:
eine Vielzahl von stationären Messern (150), die auf eine vollständig ausgefahrene Position, die es erfordert, dass der Häcksler (84) einen ersten Pegel der Motorleistung verwendet, und zumindest eine zurückgezogene Stellung einstellbar sind, die es erfordert, dass der Häcksler (84) einen Pegel der Motorleistung verwendet, der kleiner als der erste Pegel ist; und
eine Einrichtung (154) zur Bestimmung der Position der stationären Messer (150) und zur Abgabe eines diese darstellenden Signals an das Steuergerät (148),
wobei das Steuergerät (148) automatisch den maximal verfügbaren Motorleistungs-Grenzwert verringert, wenn sich die Messer (150) in der zumindest einen zurückgezogenen Stellung befinden.

17. Verfahren nach Anspruch 15 oder 16, **dadurch gekennzeichnet, dass**
die Struktur (94, 96) zum Lenken des Erntematerial-Restes eine Schwadbildungsplatte (94) umfasst, die auf eine Schwadbildungsposition zum Lenken des Erntematerial-Restes in Rückwärtsrichtung von dem Mähdrescher fort und auf eine Häckselposition zum Lenken des Erntematerial-Restes in den Häcksler (84) einstellbar ist; und
die zumindest eine Einrichtung, die zur Ausgabe eine die Konfiguration der Struktur (94, 96) darstellenden Signals betreibbar ist, einen Sensor (94d) umfasst, der feststellt, wenn die sich Schwadbildungsplatte (94) in zumindest einer ihrer Positionen befindet.

18. Verfahren nach Anspruch 17, **dadurch gekennzeichnet, dass** der Sensor (94d) die Schwadbildungsplatte (94) abtastet, wenn sich diese in der Häckselposition befindet, und ein dieses darstellendes Signal liefert.

19. Verfahren nach Anspruch 17 oder 18, **dadurch gekennzeichnet, dass**:
die Struktur (94, 96) zum Lenken des Erntematerial-Restes zusätzlich eine Häcksler-Auswahlplatte (96) umfasst, die auf eine Häckselposition zum Lenken des Erntematerial-Restes in den Häcksler (84) in Zusammenwirken mit der Schwadbildungsplatte (94) in deren Häckselposition einstellbar ist, wobei die Häcksler-Auswahlplatte (96) ebenfalls auf eine Nicht-Häckselposition einstellbar ist, um den Eintritt des Erntematerial-Restes in den Häcksler (84) zu verhindern; und
die zumindest eine Einrichtung, die zur Abgabe eines die Konfiguration darstellenden Signals einen Sensor (96d) umfasst, der zum Abtasten zumindest einer der Positionen der Häcksler-Auswahlplatte (96) konfiguriert und betreibbar ist.

20. Verfahren nach Anspruch 19, **dadurch gekennzeichnet, dass** der Sensor (96d) zum Abtasten zumindest einer der Positionen der Häcksler-Auswahlplatte (96) betreibbar ist, um die Häcksler-Auswahlplatte (96) abzutasten, wenn sich diese in der Nicht-Häckselposition befindet, und um ein dieses darstellendes Signal abzugeben.

21. Verfahren nach einem der Ansprüche 17 bis 20, **dadurch gekennzeichnet, dass** das Steuergerät (148) automatisch die Konfiguration der Struktur (94, 96) zum Lenken des Erntematerial-Restes als eine Funktion der abgegebenen Signale bestimmt und den maximal verfügbaren Motorleistungs-Grenzwert auf einen ersten Wert einstellt, wenn die Signale darstellen, dass die Struktur (94, 96) zum Lenken des Erntematerial-Restes in den Häcksler (84) konfiguriert ist, und den Grenzwert verringert, wenn die Signale darstellen, dass die Struktur (94, 96) zum Lenken des Erntematerial-Restes entlang eines Pfades zur Umgehung des Häckslers (84) konfiguriert ist.

22. Verfahren nach Anspruch 21, **dadurch gekennzeichnet, dass** wenn die Signale darstellen, dass die Struktur (94, 96) zum Lenken des Erntematerial-Restes zur Umgehung des Häckslers (84) konfiguriert ist und der Häcksler (84) abgeschaltet ist, das Steuergerät (148) den Grenzwert verglichen mit dem Fall weiter verringert, wenn der Häcksler (84) eingeschaltet ist.

## Revendications

1. Moissonneuse-batteuse (20), comprenant :
un moteur (126) pour entraîner la moissonneuse et pour actionner des sous-équipements d'entre elle comprenant au moins un mécanisme de battage (38, 48, 52) pouvant être activé pour séparer le produit récolté en grain et résidu de récolte, et un broyeur de paille (84), le broyeur de paille étant engageable pour recevoir et broyer au moins une partie du résidu de récolte et propulser le résidu haché de la moissonneuse (20), et un dispositif (150/158) ayant pour fonction de fournir un signal représentant l'état de l'enclenchement du broyeur (84),
un système de commande de moteur (146) comprenant un régulateur (148) connecté en commande opérationnelle du moteur (126), et au dispositif (150/158) pour recevoir le signal de celui-ci, le régulateur (148) étant configuré et pouvant être activé pour déterminer et régler automatiquement une limite de puissance de moteur disponible maximale en fonction d'au moins l'état de l'enclenchement du broyeur (84),
**caractérisée en ce que :**
la moissonneuse (20) comprend en outre une structure (94, 96) configurable pour diriger le résidu de récolte le long d'une trajectoire (E) dans le broyeur (84), et le long au moins d'une trajectoire alternative (F/H) pour contourner le broyeur (84), et au moins un dispositif (94d, 96d) pouvant fonctionner pour fournir un signal représentatif de la configuration de la structure au régulateur (148), et
le régulateur (148) est configuré et opérationnel pour réduire la limite en fonction d'au moins la configuration de la structure (94, 96) servant à diriger le résidu de récolte.

2. Moissonneuse-batteuse selon la revendication 1, **caractérisée en ce que** le broyeur (84) comprend :
une pluralité de couteaux (150) fixes positionnables dans une position complètement déployée qui va demander au broyeur (84) d'utiliser un premier niveau de puissance de moteur, et au moins une position rétractée qui va nécessiter un niveau de puissance de moteur inférieur au premier niveau,
et un dispositif (154) pour déterminer la position des couteaux fixes (150) et fournir un signal représentatif de celle-ci au régulateur (148),
le régulateur (148) pouvant être activé automatiquement pour régler la limite de puissance maximale disponible en fonction de la position des couteaux (150).

3. Moissonneuse-batteuse selon la revendication 2, **caractérisée en ce que** le régulateur (148) peut être activé automatiquement pour réduire la limite de puissance maximale disponible si les couteaux (150) sont dans la au moins position rétractée.

4. Moissonneuse-batteuse selon l'une quelconque des revendications précédents, **caractérisée en ce que**:
la structure (94, 96) pour diriger le résidu de récolte comprend une tôle d'andainage (94) positionnable dans une position d'andainage pour diriger le résidu de récolte vers l'arrière de la machine de récolte (20), et dans une position de broyage pour diriger le résidu de récolte dans le broyeur (84), et
le au moins un dispositif pouvant être activé pour fournir un signal représentatif de la configuration de la structure (94, 96) comprend un détecteur (94d) configuré et opérationnel pour détecter lorsque la tôle d'andainage (94) est dans au moins l'une des positions de celle-ci.

5. Moissonneuse-batteuse selon la revendication 4, **caractérisée en ce que** le détecteur (94d) est opérationnel pour détecter la tôle d'andainage (94) lorsqu'elle est dans la position de broyage et fournir un signal représentatif de celle-ci.

6. Moissonneuse-batteuse selon la revendication 4 ou 5, **caractérisée en ce que:**
la structure (94, 96) pour diriger le résidu de récolte comprend en plus une plaque de sélection de broyeur (96) positionnable dans une position de broyage pour diriger le résidu de récolte dans le broyeur (84) en coopération avec la tôle d'andainage (94) lorsque cette dernière est en position de broyage, la plaque de sélection de broyeur (96) étant également positionnable dans une position de non-broyage pour empêcher l'entrée de résidu de récolte dans le broyeur (84), et
le au moins un dispositif pouvant fonctionner pour fournir un signal représentatif de la configuration comprend un détecteur (96d) configuré et opérationnel pour détecter au moins l'une des positions de la plaque de sélection (96) de broyeur (84).

7. Moissonneuse-batteuse selon la revendication 6, **caractérisée en ce que** le détecteur (96d) pour détecter au moins une des positions de la plaque de sélection du broyeur (96) est opérationnel pour détecter la plaque de sélection de broyeur (96) lorsqu'elle est en position de non-broyage et fournir un signal représentatif de celle-ci.

8. Moissonneuse-batteuse selon l'une quelconque des revendications 4 à 7, **caractérisée en ce que** le régulateur (148) est programmé pour déterminer automatiquement la configuration de la structure (94, 96) servant à diriger le résidu de récolte, en fonction des signaux fournis, et pour régler la limite de puissance de moteur (126) maximale admissible à une première valeur lorsque les signaux indiquent que la structure (94, 96) est configurée pour diriger le résidu de récolte dans le broyeur (84), et pour réduire la limite lorsque les signaux indiquent que la structure (94, 96) est configurée pour diriger le résidu de récolte le long d'une trajectoire (F/H) pour contourner le broyeur (84).

9. Moissonneuse-batteuse selon la revendication 8, **caractérisée en ce que** le régulateur (148) est programmé pour réduire davantage la limite, comparée à celle fixée lorsque le broyeur (84) est engagé, si les signaux indiquent que la structure (94, 96) est configurée pour diriger le résidu de récolte pour contourner le broyeur (84) et le broyeur (84) est désengagé.

10. Moissonneuse-batteuse selon l'une quelconque des revendications précédentes, **caractérisée en ce que** le dispositif pouvant fonctionner pour fournir un signal représentatif de l'état de l'engagement du broyeur (84) comprend un détecteur (158) pour surveiller la vitesse de rotation du broyeur (84).

11. Moissonneuse-batteuse selon la revendication 10, **caractérisée en ce que** système de commande de moteur (146) comprend un système d'avertissement (146, 136) opérationnel pour avertir le conducteur d'un risque d'obstruction lorsque le broyeur (84) n'est pas en service, alors que la structure (94, 96) pour diriger le résidu de récolte est configurée pour diriger le résidu de récolte dans le broyeur (84).

12. Moissonneuse-batteuse selon la revendication 10 ou 11, **caractérisée en ce que** système de commande de moteur (146) comprend un système d'avertissement (146, 136) opérationnel pour avertir le conducteur lorsque le broyeur (84) est en service, alors que la structure (94, 96) pour diriger le résidu de récolte est configurée pour diriger le résidu de récolte pour contourner le broyeur (84)

13. Moissonneuse-batteuse selon la revendication 4, ou toute revendication en dépendant, **caractérisée en ce que** système de commande de moteur (146) comprend un système d'avertissement (146, 136) opérationnel pour avertir le conducteur pour régler la position d'un élément (90) dans la trajectoire du flux (F) de résidu de récolte derrière la tôle d'andainage (94) lorsque la tôle d'andainage (94) est en position d'andainage.

14. Moissonneuse-batteuse selon la revendication 13, **caractérisée en ce que** élément derrière la tôle d'andainage (94) comprend un volet d'épandage (90) adjacent à la sortie du broyeur de résidu (84).

15. Procédé de commande d'une limite de puissance de moteur disponible maximale d'une moissonneuse-batteuse (20), comprenant les dispositions suivantes :
- fournir un moteur (126) pour entraîner la moissonneuse (20) et pour actionner les sous-équipements incluant au moins un mécanisme de battage (38, 48, 52) opérationnel pour séparer le produit récolté en grain et résidus de récolte, et un broyeur de paille (84), le broyeur de paille étant engageable pour broyer au moins une partie des résidus de récolte et propulser les résidus broyés de la moissonneuse (20), et un dispositif (154/158) opérationnel pour fournir un signal représentatif de l'état de l'engagement du broyeur (84),
- fournir un système de commande de moteur (146) comprenant un régulateur (148) connecté en commande opérationnelle du moteur (126), et au dispositif (154/158) de réception du signal de celui-ci, et
- activer automatiquement le régulateur (148) pour déterminer et régler la limite de puissance de moteur disponible maximale en fonction d'au moins le nombre et l'identité des sous-équipements engagés, et
**caractérisé en ce qu'**il comprend en plus les dispositions suivantes :
- fournir une structure (94, 96) configurable pour diriger le résidu de récolte le long d'une trajectoire (E) allant dans le broyeur (84), et le long d'au moins une trajectoire alternative pour contourner le broyeur (84), et au moins un dispositif (94d, 96d) pouvant fonctionner pour fournir un signal représentatif de la configuration de la structure (94, 96) au régulateur (148),
- faire fonctionner automatiquement le régulateur (148) pour réduire la limite de puissance de moteur disponible maximale en fonction d'au moins la configuration de la structure (94, 96) destinée à diriger le résidu de récolte, incluant le cas où la structure (94, 96) est configurée pour diriger le résidu de récolte pour contourner le broyeur (84).

16. Procédé selon la revendication 15, **caractérisé en ce que** le broyeur (84) comprend :
une pluralité de couteaux (150) fixes positionnables dans une position complètement déployée qui va demander au broyeur (84) d'utiliser un premier niveau de puissance de moteur, et au moins une position rétractée qui va qui va demander au broyeur (84) d'utiliser un niveau de puissance de moteur inférieur au premier niveau, et
un dispositif (154) pour déterminer la position des couteaux fixes (150) et fournir un signal représentatif de celle-ci au régulateur (148),
dans lequel le régulateur (148) réduira automatiquement la limite de puissance de moteur disponible maximale si les couteaux (150) sont dans la au moins une position rétractée.

17. Procédé selon la revendication 15 ou 16, **caractérisé en ce que:**
la structure (94, 96) destinée à diriger le résidu de récolte comprend une tôle d'andainage (94) positionnable dans une position d'andainage pour diriger le résidu de récolte à l'arrière de la moissonneuse-batteuse, et dans une position de broyage pour diriger le résidu de récolte dans le broyeur (84), et
le au moins un dispositif opérationnel pour fournir un signal représentatif de la configuration de la structure (94, 96) comprend un détecteur (94d), qui détecte si la tôle d'andainage (94) est dans au moins une des positions de celle-ci.

18. Procédé selon la revendication 17, **caractérisé en ce que** le détecteur (94d) détecte la tôle d'andainage (94) lorsqu'elle est en position de broyage et fournit un signal représentatif de celle-ci.

19. Procédé selon la revendication 17 ou 18, **caractérisé en ce que** :
la structure (94, 96) pour diriger le résidu de récolte comprend en plus une plaque de sélection de broyeur (96) positionnable dans une position de broyage pour diriger le résidu de récolte dans le broyeur (84) en coopération avec la tôle d'andainage (94) lorsque cette dernière est en position de broyage, la plaque de sélection de broyeur (96) étant également positionnable dans une position de non-broyage pour empêcher l'entrée de résidu de récolte dans le broyeur (84), et
le au moins un dispositif pouvant fonctionner pour fournir un signal représentatif de la configuration comprend un détecteur (96d) configuré et opérationnel pour détecter au moins l'une des positions de la plaque de sélection (96) de broyeur (84).

20. Procédé selon la revendication 19, **caractérisé en ce que** le détecteur (96d) pour détecter au moins une des positions de la plaque de sélection du broyeur (96) est opérationnel pour détecter la plaque de sélection de broyeur (96) lorsqu'elle est en position de non-broyage et fournir un signal représentatif de celle-ci.

21. Procédé selon l'une quelconque des revendications 17 à 20, **caractérisé en ce que** le régulateur (148) détermine automatiquement la configuration de la structure (94, 96) destinée à diriger le résidu de récolte, en fonction des signaux fournis, et règle la limite de puissance de moteur disponible maximale à une première valeur lorsque les signaux indiquent que la structure (94, 96) est configurée pour diriger le résidu de récolte dans le broyeur (84), et réduit la limite lorsque les signaux indiquent que la structure (94, 96) est configurée pour diriger le résidu de récolte le long d'une trajectoire contournant le broyeur (84).

22. Procédé selon la revendication 21, **caractérisé en ce que,** si les signaux indiquent que la structure (94, 96) est configurée pour diriger le résidu de récolte pour contourner le broyeur (84) et que le broyeur (84) est désengagé, le régulateur (148) va réduire davantage la limite, comparée à celle réglée lorsque le broyeur (84) est engagé.
